# FASCICULE DE BREVET EUROPEEN

(11) **EP 1 725 862 B1**
(45) Date de publication et mention de la délivrance du brevet: **12.05.2010**
(21) Numéro de dépôt: 05708767.8
(22) Date de dépôt: 18.03.2005
(51) Int. Cl.: G01N 27/447

(54) **DISPOSITIF ET PROCEDE DE FILTRATION ET/OU DE SEPARATION DE MOLECULES, NOTAMMENT DE PROTEINES**
VORRICHTUNG UND VERFAHREN ZUR FILTRATION UND/ODER TRENNUNG VON MOLEKÜLEN, INSBESONDERE PROTEINEN
DEVICE AND METHOD FOR FILTRATION AND/OR SEPARATION OF MOLECULES, PARTICULARLY PROTEINS

(30) Priorité: 18.03.2004 FR 0402781
(43) Date de publication de la demande: 29.11.2006
(73) Titulaire: Portmann Instruments A.G., 4105 Biel-Benken (CH)
(72) Inventeur: STARK, Peter, CH-4124 Schoenenbuch (CH)
(74) Mandataire: Nithardt, Roland
(86) Numéro de dépôt international: PCT/IB2005/000695
(87) Numéro de publication internationale: WO 2005/090962

(56) Documents cités:
- WO-A-99/15875
- WO-A-03/101591
- DE-A- 10 111 853
- FR-A- 2 760 844
- US-A- 6 071 395
- US-B1- 6 537 434
- US-B1- 6 685 811

## Description

### Domaine technique :

La présente invention concerne un dispositif de filtration et/ou de séparation de molécules, notamment de protéines, pourvu d'au moins une zone de filtration comportant au moins un réservoir de filtration apte à recevoir une solution contenant les molécules à filtrer, le réservoir de filtration étant pourvu de moyens de filtration le séparant en au moins deux chambres pour filtrer les molécules selon au moins un critère physique et/ou chimique prédéterminé, le dispositif de filtration comportant également des moyens générateurs d'au moins un champ électrique pour tendre à provoquer le déplacement des molécules d'une chambre à l'autre au travers desdits moyens de filtration. L'invention concerne également un procédé de filtration et/ou de séparation de molécules mis en oeuvre par ledit dispositif.

### Technique antérieure :

De manière connue, pour séparer et/ou de filtrer des molécules, on utilise plusieurs techniques telles que par exemple l'électrophorèse (CE), la focalisation isoélectrique (CIEF), la chromatographie électrique ou liquide (CEC et CLC).

Le principe de base de la focalisation isoélectrique (CIEF) consiste à fractionner les molécules, par exemple des protéines, en fonction de leur point isoélectrique (pI) au moyen de membranes chimiques décrites notamment dans la publication WO-A-01/86279.

Le fractionnement des molécules, dont un exemple est donné par la publication WO-A-01/75432, est obtenu en effectuant les différentes étapes décrites ci-après.
- Dans un premier temps, on prépare un réservoir de filtration dans lequel on crée un gradient de pH. Pour ce faire, on utilise par exemple une solution contenant des poly-électrolytes, appelées ampholytes, portant un certain nombre de groupes ionisants positivement ou négativement (Amines, Carboxyles ou Sulfates) et possédant un certain pouvoir tampon.
- Dans un second temps, on soumet les ampholytes de cette solution à un champ électrique, par exemple au moyen de deux électrodes, une anode et une cathode, prévues aux extrémités opposées du réservoir de filtration. Sous l'effet du champ électrique, les ampholytes se déplacent et se positionnent dans l'ordre de leur propre pI auquel elles s'immobilisent. Leur capacité tampon aide les ampholytes à maintenir autour d'elles une zone de pH égale à leur pI. Une série d'ampholytes ayant un pI couvrant une certaine gamme de pH crée ainsi un gradient continu de pH. En conséquence, on trouve sur le marché un grand nombre de mélanges d'ampholytes permettant de couvrir des gammes de pH très étroites ou très larges.
- Dans un troisième temps, on place des molécules chargées dans ce réservoir de filtration, telles que par exemple des protéines, que l'on soumet à un champ électrique généré par les électrodes pour provoquer le déplacement des molécules. Les molécules chargées migrent jusqu'à atteindre le pH correspondant à leur pI où leur charge nette est nulle et s'immobilisent.
- Dans un quatrième temps, on prélève au moyen par exemple de pipettes les molécules réparties selon leur pH.

On peut ainsi créer des gradients de diverses amplitudes de pH en combinant divers ampholytes. On peut par exemple obtenir des gradients fins (e.g. 0.1 unité de pH) sur des gammes étroites de pH (e.g. entre pH 5 à 7 ou 6 à 8), notamment pour effectuer une séparation très fine et mesurer le pI avec précision. Inversement, on peut aussi créer un gradient étalé (e.g. 0.4 unité de pH) pour une gamme élargie de pH (e.g. entre pH 2 à 10), notamment pour analyser un grand nombre de protéines.

Un autre procédé de filtration basé en partie sur le même principe est décrit dans la publication WO-A-03/101591. Ce procédé de filtration consiste à utiliser un premier courant électrique pour séparer des molécules en fonction de leur pH, puis à appliquer aux molécules d'un pH donné un second courant électrique permettant leur séparation selon une autre caractéristique comme par exemple leur dimension.

Quel que soit le procédé de filtration utilisé, la séparation des molécules nécessite de nombreuses opérations répétitives ou non, qui la rendent longue à réaliser, à des coûts prohibitifs. Par ailleurs, l'un des inconvénients majeurs de ces procédés de filtration de molécules réside dans le fait qu'au point isoélectrique (pI), les protéines par exemple, sont peu solubles et peuvent précipiter. Il est alors impossible de les utiliser et la proportion de perte peut être très importante. De plus, ces procédés de filtration requièrent de la part de l'utilisateur une bonne dextérité et une formation spécifique d'où un coût élevé de mise en oeuvre, ce coût étant renouvelé pour chaque nouvelle filtration de molécules.

Aussi, pour pallier ces inconvénients, d'autres procédés de filtration de molécules utilisant simultanément plusieurs pipettes de prélèvement adjacentes et alignées ont été développés. Deux d'entres eux sont décrits dans les publications US-B-6 660 149 et WO-A-01/36449. Ces procédés de filtration permettent de travailler simultanément sur plusieurs réservoirs de filtration. Ces procédés de filtration restent toutefois laborieux à mettre en oeuvre. Ils sont de plus peu évolutifs, ont des possibilités limitées de modes opératoires et manquent de souplesse. Ces procédés de filtration comme les autres procédés de filtration connus ne sont donc pas satisfaisants.

Par ailleurs, les publications DE-A-199 48 049, FR-A-2 760 844, US-A-6 071 395 décrivent des dispositifs adaptés à la filtration dimensionnelle des molécules d'acide nucléique (ADN) de même charge électrique mais non adaptés à la filtration isoélectrique des protéines de charges électriques différentes.

La publication US-B-6 685 811 décrit un procédé de séparation bidirectionnelle de molécules dans lequel les molécules en gel sont soumises, selon une première direction, à une filtration isoélectrique provoquée par deux électrodes disposées aux extrémités d'un couloir de filtration séparé en plusieurs chambres successives par plusieurs membranes, et selon une seconde direction, à une filtration dimensionnelle. La distance à parcourir par les molécules dans le couloir de filtration et la distance séparant les électrodes sont telles que les molécules se déplacent très lentement, la filtration pouvant durer plus de dix heures. Ce procédé a donc un rendement médiocre.

Les publications DE-A-101 11 853, US-B-6 537 434 et WO-A-99/15875 décrivent des robots de prélèvement de molécules en solution par pipette en vue de leur traitement par exemple par filtration. Ces robots sont de simples manipulateurs et ne sont pas prévus pour assurer l'opération de filtration en tant que telle.

### Exposé de l'invention :

La présente invention vise à pallier ces inconvénients en proposant un dispositif et un procédé de filtration notamment par focalisation isoélectrique permettant de filtrer et/ou de séparer des molécules par leur point isoélectrique et principalement des protéines de charges électriques différentes, ce dispositif et ce procédé étant automatisés, évolutifs, souples, précis, efficaces, fiables, rapides à mettre en oeuvre avec un taux de perte de molécules minime. Ainsi, la filtration et/ou la séparation peuvent être réalisées de manière industrielle, selon un ou plusieurs critères prédéfinis ou aléatoires, selon des séquences prédéfinies ou aléatoires et facilement répertoriées, ce qui améliore et facilite la traçabilité des opérations de séparation et/ou de filtration effectuées.

Dans ce but, l'invention concerne un dispositif de filtration tel que defini par la revendication 1.

Dans un premier exemple, les moyens de déplacement comportent au moins un chariot portant le porte-outils, ce chariot étant agencé pour être mobile sur un châssis pour déplacer l'outil par rapport à la zone de filtration. A cet effet, les moyens de déplacement comportent par exemple deux rails sensiblement parallèles l'un par rapport à l'autre et agencés pour guider le chariot en translation sensiblement parallèle par rapport à la zone de filtration.

Les rails peuvent être portés par des montants solidaires du châssis et disposés de part et d'autre de la zone de filtration. Les rails peuvent également être intégrés au châssis, le chariot définissant alors un portique.

De manière avantageuse, le chariot comporte avantageusement une glissière sur laquelle le porte-outil est monté mobile en translation.

Dans un second example, les moyens de déplacement comportent au moins un bras articulé portant le porte-outils.

Le dispositif de filtration comporte plusieurs chariots et/ou bras articulés et/ou porte-outils agencés pour être démontables et interchangeables.

Le dispositif de filtration comporte avantageusement au moins un porte-outil dédié à la filtration isoélectrique et un porte-outil dédié à la manipulation des réservoirs de filtration.

De manière préférentielle, le dispositif de filtration comporte un outil complémentaire choisi dans le groupe comprenant une pince, un préhenseur électromagnétique, un porte-seringue, des doigts ou un bras de préhension, des mors, une seringue, un piston, une ventouse, un système par aspiration.

Le support portant lesdits réservoirs peut être avantageusement couplé à des moyens de déplacement complémentaires asservis aux moyens de commande et agencés pour déplacer ledit support en translation et/ou en rotation par rapport à la zone de filtration et/ou au porte-outil.

De manière préférentielle, le dispositif de filtration comporte au moins une zone de préparation agencée pour autoriser les opérations pré et/ou post filtration telles que : stockage de molécules, rinçage, dilution, désinfection, ajout d'additif, déchets ou autres.

La zone de préparation peut être pourvue d'au moins un bac choisi dans le groupe comprenant un bac de stockage de molécules, un bac tampon, un bac à déchets, un bac à solvant, un bac de nettoyage, un bac à réactions chimiques et/ou biologiques. Le réservoir de filtration est avantageusement choisi dans le groupe comprenant un tube à essai, un flacon, une éprouvette et les moyens de filtration comportent de préférence le filtre isoélectrique disposé sensiblement dans l'axe de symétrie du réservoir de filtration. Ils peuvent également comporter au moins un filtre complémentaire choisi dans le groupe comprenant les filtres cut-off, les filtres électrophorétiques ou tout autre filtre adapté, agencés pour séparer les molécules selon leur taille, leur charge électrique ou tout autre critère.

Les moyens de commande informatisés sont avantageusement pilotés par au moins une unité centrale gérée par au moins un programme informatique et les moyens de déplacement comportent au moins l'un des actionneurs choisi dans le groupe comprenant un moteur, un vérin, un moto-réducteur, un électro-aimant.

Le dispositif de filtration est couplé à des moyens de climatisation agencés pour réguler au moins la température des réservoirs de filtration, par exemple au moins une enceinte thermiquement régulée apte à recevoir ledit dispositif de filtration.

L'invention concerne également un procédé de filtration et/ou de séparation de molécules, notamment de protéines selon la revendication 20.

### Description sommaire des dessins :

La présente invention et ses avantages apparaîtront mieux dans la description suivante d'un mode de réalisation en référence aux dessins annexés donnés à titre d'exemple non limitatif, dans lesquels :
- les figures 1A et 1B sont des vues en coupe d'un réservoir de filtration du dispositif de filtration selon l'invention, ce réservoir de filtration contenant des molécules en solution respectivement non soumises et soumises à l'action d'un champ électrique,
- les figures 2A à 2D sont des vues en coupe du dispositif de filtration selon l'invention respectivement dans des étapes de déplacement d'un réservoir de filtration, d'introduction d'un additif dans un réservoir de filtration, de déplacement unitaire d'électrodes, de déplacement simultané d'électrodes,
- la figure 3A est une vue de dessus du dispositif de filtration selon la figure 2A,
- la figure 3B est une vue de dessus du dispositif de filtration selon la figure 2B, et
- les figures 3C et 3D sont des vues de dessus du dispositif de filtration selon la figure 2D, le support des électrodes étant représenté selon deux positions différentes.

Dans un but de simplification, on utilise dans la suite de la description le terme unique de "filtration" pour désigner "la filtration et/ou la séparation".

### Meilleure manière de réaliser l'invention et possibilités d'applications industrielles :

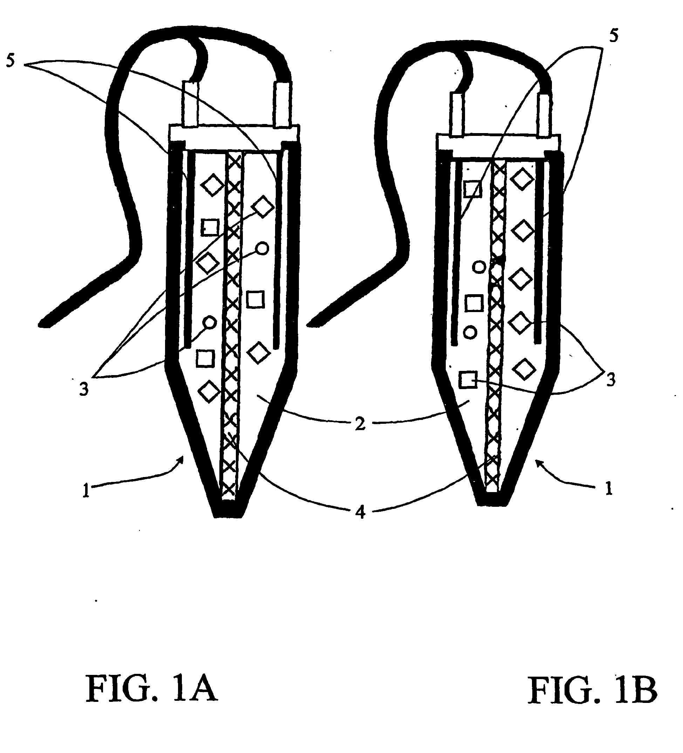

En référence aux figures 1A et 1B, on utilise pour filtrer des molécules, des réservoirs de filtration 1, par exemple en forme de tube à essai, d'éprouvette, de flacon, dans lesquels on injecte une solution 2 contenant les molécules 3 à filtrer. Sous le terme générique de "solution", on entend un liquide, un gel, un gel liquide ou autre équivalent. Chaque réservoir de filtration 1 comporte des moyens de filtration 4 tels que par exemple un filtre disposé sensiblement dans le plan médian du réservoir de filtration 1 et le séparant en deux chambres. Les moyens de filtration 4 sont destinés à n'autoriser qu'un passage sélectif des molécules 3 selon un critère physique et/ou chimique prédéterminé.

Les molécules sont ensuite soumises à un champ électrique par des moyens générateurs de champ électrique tels que par exemple des électrodes 5 qui tendent à provoquer leur déplacement d'une chambre vers l'autre. Ces électrodes 5 sont par exemple réalisées en platine, en iridium dioxyde, en métal ou en alliage de toute nature électriquement conductrice, et insérées dans une céramique ou dans tout autre matériau équivalent ou matière électriquement isolante. Selon le filtre 4 utilisé, certaines molécules 3 peuvent le traverser alors que d'autres sont bloquées. Les molécules 3 sont ainsi filtrées selon le critère de filtration prédéterminé par le choix du filtre 4. Ce critère est par exemple la taille, le pI, la charge des molécules 3. On utilisera par exemple l'un des filtres 4 ci-après :
- un filtre cut-off ou filtre à porosité sélective filtrant les molécules en fonction de leur taille,
- un filtre isoélectrique filtrant les molécules en fonction de leur point isoélectrique pI,
- un filtre électrophorétique ou filtre à échanges d'ions filtrant les molécules en fonction de leur charge électrique.

Le procédé de filtration se déroule comme suit :
- lorsque les électrodes 5 ne sont pas alimentées, il y a absence de champ électrique (Cf. figure 1A). Les molécules 3 sont réparties aléatoirement dans les deux chambres du réservoir de filtration 1 si la solution 2 a été injectée de chaque coté du filtre 4 ou dans une seule chambre si l'injection a été faite d'un seul coté du filtre 4, l'autre chambre étant remplie d'une solution tampon, et
- lorsque les électrodes 5 sont alimentées, elles génèrent un champ électrique (Cf. figure 1B) provoquant le déplacement des molécules 3. Alors, selon leurs caractéristiques et celles du filtre 4 choisi, les molécules 3 traversent ou non le filtre 4. On obtient ainsi deux chambres contenant des molécules 3 en solution 2 différenciées selon le critère de filtration prédéterminé. Les molécules 3 filtrées de l'une ou des deux chambres peuvent ensuite être récupérées par prélèvement pour être une nouvelle fois filtrées selon un autre critère ou pour être utilisées dans une application spécifique.

Comme on le verra dans la suite de la description, le dispositif et le procédé de filtration selon l'invention permettent de combiner aisément différentes techniques de filtration avec de multiples critères de filtration en autorisant une filtration séquentielle très souple et évolutive.

Pour la technique de la filtration isoélectrique, qui est ici privilégiée pour trier les protéines, on utilise un filtre 4 isoélectrique qui divise le réservoir de filtration 1 en deux chambres de pH différents. Ce filtre 4 est constitué d'une membrane isoélectrique capable d'échanger et de conduire électriquement des ions de différentes polarités dans des directions opposées. Ces membranes isoélectriques 4 peuvent être fabriquées selon la méthode générale décrite dans la publication "Advances in Electrophoresis - Volume 5" rédigée par Faupel, Righetti et Wenisch, publiée en 1992, éditée par A. Chrambach, MJ. Dunn, B.J. Radola, VCH, Weinheim, New York, Basel, Cambridge, ISSN 0932-3031 et reprise par la société Amersham dans la publication "Protocol Guide de l'isoprime" ( article 80-6350-18 ) en 1997. Ces membranes isoélectriques 4 peuvent être achetées dans les commerces spécialisés ou créées selon les besoins. Elles sont capables de moduler la charge des macro-ions à l'aide d'un mécanisme continu de titration. De plus, elles ont un bon pouvoir tampon au pI et des pores suffisamment grands pour laisser passer des molécules telles que les protéines, une bonne résistance mécanique et une bonne stabilité chimique leur permettant de couvrir une plage de pH allant de 3 à 11, tout en étant le cas échéant en présence d'additifs comme des agents oxydants et des agresseurs chimiques ou biochimiques.

Les molécules 3 à filtrer sont chargées électriquement ce qui leur permet de migrer dans un champ électrique. En présence du champ électrique, le déplacement des molécules 3 chargées devient sélectif et s'effectue dans deux milieux différents, l'un formé par la solution 2 (phase liquide), l'autre formé par la membrane isoélectrique 4 (phase solide ou gel). Grâce à son pouvoir tampon élevé, la membrane isoélectrique 4 conserve un pH fixe. Par contre, le pH régnant de chaque côté de la membrane isoélectrique 4 évolue au cours du temps et au cours du déplacement des molécules 3. Cette évolution du pH est importante en début de filtration des molécules 3 puis diminue progressivement.

Grâce à la membrane isoélectrique 4, les molécules 3 ne sont pas à leur pI mais dans un pH légèrement supérieur ou inférieur. De ce fait, les molécules 3 telles que les protéines ne précipitent pas. La vitesse de déplacement des molécules 3 est proportionnelle à la charge, qui est elle-même proportionnelle à la différence entre le pH du milieu et le pI de la molécule 3. Tant que le pH est différent du pI, les molécules 3 se déplacent dans le champ électrique. Dès que le pH est égal au pI, les molécules 3 ne possèdent aucune charge nette, le nombre des charges positives étant égal à celui des charges négatives, les molécules 3 ne se déplacent plus. On atteint alors un stade d'équilibre.

La vitesse de déplacement des molécules 3 dépend de facteurs tels que :
- la nature de la solution 2 et notamment de sa constante diélectrique, sa viscosité, sa force ionique, son pH,
- la nature de la molécule 3 et notamment de sa charge électrique globale, de sa forme, de sa taille et de sa concentration,
- la température qui agit directement sur la viscosité de la solution 2, la constante diélectrique, le pH et la stabilité de la molécule 3.

Il est bien entendu que tout principe de filtration de molécules 3 complémentaire que la filtration isoélectrique peut être utilisé avec le dispositif 10 et le procédé de filtration de l'invention.

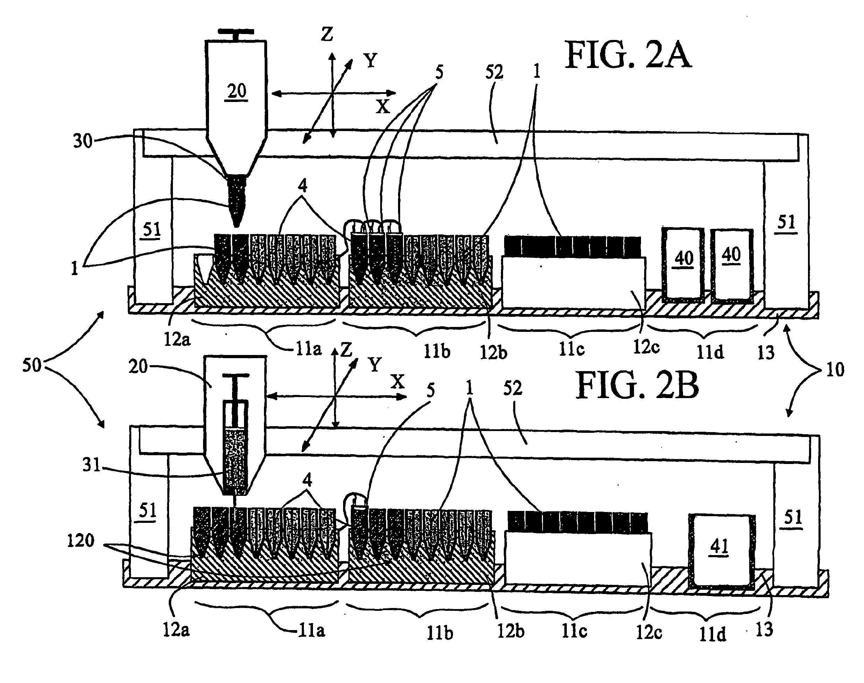

Selon l'invention et en référence aux figures 2A à 3D, le dispositif de filtration 10 comporte trois zones de filtration 11a-11c de molécules, chacune pourvue d'un ensemble de réservoirs de filtration 1 indépendants destinés à filtrer des molécules 3 en solution 2. Les réservoirs de filtration 1 sont portés et regroupés par série dans des logements 120 prévus sur des supports 12a-12c disposés sur un châssis 13 commun. Le dispositif de filtration 10 comporte également un porte-outils 20 mécanisé portant un ou plusieurs outils 5, 30-33, ce porte-outils 20 étant couplé à des moyens de déplacement 50 et à des moyens de commande informatisés non représentés commandant le déplacement du porte-outils 20 et/ou le fonctionnement des outils 5, 30-33.

Le dispositif de filtration 10 comporte également, de manière optionnelle, une zone de préparation 11d pourvue d'un ou de plusieurs bacs 40, 41 tels que par exemple un bac à molécules 3 filtrées, un bac tampon, un bac à déchets, un bac à solvant, un bac de nettoyage, un bac à additifs, un bac à réactions chimiques et/ou biologiques ou tout autre bac adapté.

Dans les exemples donnés, les moyens de déplacement 50 comportent deux rails 51 sensiblement parallèles, formés par des montants disposés de part et d'autre des zones de filtration 11a-11c, et sur lesquels un chariot 52 est monté mobile en translation selon l'axe Y. Ce chariot 52 définit une glissière sur laquelle le porte-outils 20 est monté mobile en translation selon l'axe X. Les moyens de déplacement 50 comportent des mécanismes de transmission de mouvement (non représentés) tels que par exemple des poulies-courroie, pignon-chaîne, vis sans fin-écrou, engrenages, galet-crémaifière ou tout autre mécanisme adapté, entraînés par un actionneur tel que par exemple un vérin, un moteur, un moto-réducteur ou par tout autre actionneur adapté. Les moyens de déplacement 50 sont commandés par les moyens de commande informatisés (non représentés) permettant de commander les déplacements du porte-outils 20 par rapport au chariot 52 et du chariot 52 par rapport aux rails 51. Le porte-outil 20 peut ainsi être déplacer dans un plan sensiblement parallèle par rapport aux zones de filtration 11a-11c et de préparation 11d pour positionner l'outil 5, 30-33 en tout endroit au-dessus de ces zones de filtration 11a-11c et/ou de la zone de préparation 11d. Le porte-outils 20 peut également être monté mobile en translation selon l'axe Z par rapport au chariot 52 pour déplacer l'outil 5, 30-33 verticalement par rapport aux zones de filtration 11a-11c et préparation 11d. Il peut également être monté pivotant. On a ainsi un positionnement précis de l'outil 5, 30-33 selon trois axes. Les moyens de commande informatisés comportent par exemple une unité centrale (non représentée) gérée par un ordinateur piloté par un ou plusieurs programmes ou logiciels.

Selon une variante de réalisation non représentée, le chariot 52 et les montants 51 peuvent être remplacés par un portique mobile en translation sur des rails intégrés au châssis 13.

De manière générale, le porte-outil 20 peut porter un ou plusieurs outils 5, 30-33 choisis en fonction des opérations à effectuer, dont quelques exemples sont décrits ci-après. En priorité, le porte-outil 20 porte une ou plusieurs paires d'électrodes 5 alimentées électriquement pour pouvoir effectuer au moins la filtration isoélectrique des molécules dans un ou plusieurs réservoirs simultanément et de manière automatisée. Ensuite, le porte-outil 20 porte des outils de préhension 30, comme par exemple une pince, des mors, un préhenseur électromagnétique, un porte-seringue, des doigts de préhension, etc., agencés pour prendre, déplacer et déposer un ou plusieurs réservoirs de filtration 1, d'autres électrodes 5 indépendantes du porte-outil 20des seringues 31, des filtres 4 ou tout autre élément adapté. Le porte-outil 20 peut également porter des outils de prélèvement et/ou d'injection 31 tels que par exemple une seringue, un piston, etc., agencés pour injecter et/ou prélever une solution, un additif, des molécules 3 en solution 2, les molécules filtrées, etc. Le porte-outil 20 comporte des moyens de positionnement de l'outil 5, 30-33 selon un à trois axes, par rotation, translation et/ou toute combinaison de mouvements. Les outils 5, 30-33 peuvent être stockés dans un magasin d'outils (non représenté) dans lequel le porte-outil 20 viendra le ou les chercher successivement ou simultanément. Le porte-outil 20 peut également porter plusieurs outils 5, 30-33 simultanément.

Différentes étapes d'un procédé de filtration mis en oeuvre par le dispositif de filtration 10 sont décrites ci-après. Il est bien évident que d'autres étapes non décrites sont envisageables. Dans ces exemples, les trois zones de filtration 11a-11c du dispositif de filtration 10 sont en partie pourvues de réservoirs de filtration 1, une partie des logements 120 prévus dans les supports 12a-c étant inutilisés. Une partie seulement des réservoirs de filtration 1 présents contiennent des molécules 3 à filtrer, déjà filtrées ou en cours de filtration.

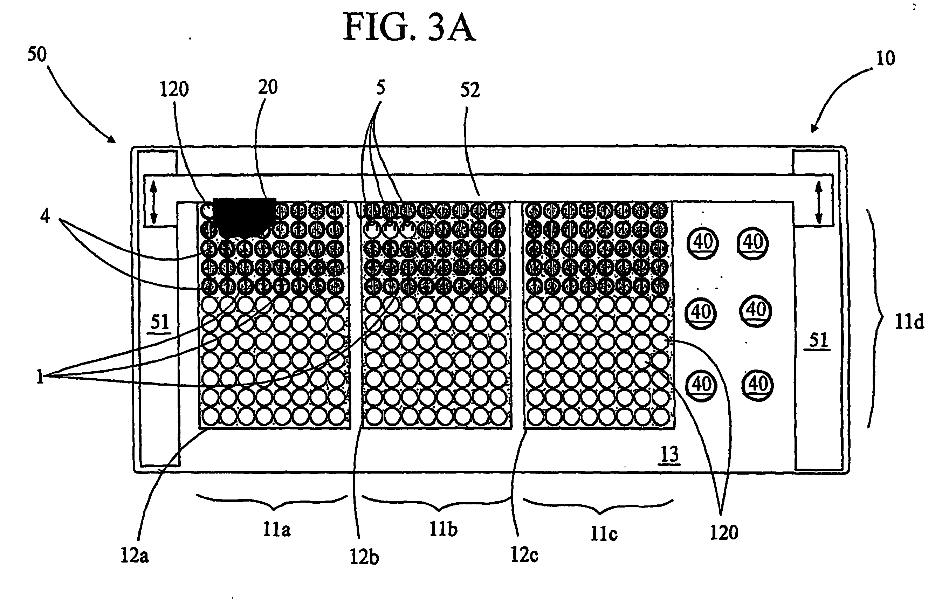

Les figures 2A et 3A représentent le dispositif de filtration 10 lors d'une étape de préhension d'un réservoir de filtration 1. Pour cette étape, le porte-outil 20 comporte une pince de préhension 30 permettant la préhension individuelle d'un réservoir de filtration 1 pour le déplacer dans un plan horizontal par rapport à la zone de filtration 11a-11c et aux rails 51. La pince de préhension 30 peut être pivotante et/ou inclinable pour faire pivoter le réservoir de filtration 1 et/ou l'incliner selon les besoins. L'ensemble du porte-outils 20 peut également être prévu pivotant et/ou inclinable par rapport au chariot 52. Trois des réservoirs de filtration 1 de la zone de filtration 11b sont pourvus d'électrodes 5, indépendantes du porte-outil 20, permettant d'activer le champ électrique nécessaire à la filtration des molécules 3. Dans ce cas, les électrodes 5 peuvent être amovibles ou fixées aux réservoirs de filtration 1. Elles peuvent comporter des bornes de raccordement (non représentées) permettant leur branchement sélectif. Ainsi, il est possible d'effectuer simultanément des opérations de filtration dans certains réservoirs de filtration 1 et des opérations de déplacement d'autres réservoirs de filtration 1 et/ou de bacs 40. Dans cet exemple, la zone de préparation 11d comporte six bacs 40 destinés à recevoir les molécules 3 filtrées. Il est bien entendu que le porte-outil 20 peut recevoir tout autre type d'outils de préhension 30 adapté.

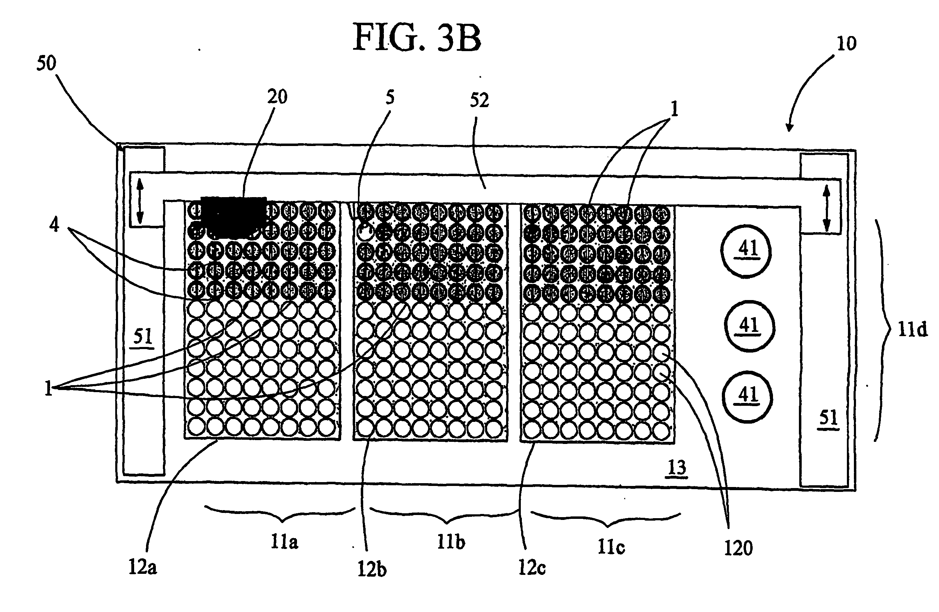

Les figures 2B et 3B représentent le dispositif de filtration 10 lors d'une étape d'injection et/ou de prélèvement de molécules 3 en solution 2. Pour cette étape, le porte-outil 20 comporte une seringue 31 avec laquelle on peut injecter des molécules 3 en solution 2, une solution autre, un additif et/ou prélever une partie des molécules 3 en solution 2 après filtration. Dans cet exemple, la seringue 31 est intégrée au porte-outil 20. Il est bien entendu possible de prévoir une seringue 31 externe tenue par un outil de préhension 30 précédemment décrit ou par tout autre outil adapté.

Cette seringue 31 peut être remplacée par un piston ou par tout autre moyen de prélèvement et/ou d'injection similaire. La seringue 31 peut être déplacée d'un réservoir de filtration 1 à un autre et/ou vers les bacs 41. La seringue 31 peut être prévue fixe ou mobile par rapport au porte-outils 20. Lors de cette étape, la zone de préparation 11d est pourvue de quatre bacs 41 de dimensions supérieures aux précédents et servant, selon les besoins, de bac réceptionnant les molécules filtrées, de bac tampon, de bac à déchets, de bac à solvant et/ou de bac de nettoyage. Sur les figures 2B, 3B, seul un des réservoirs de filtration 1 de la zone de filtration 11b est pourvu d'électrodes 5 indépendantes du porte-outil 20 permettant d'activer le champ électrique.

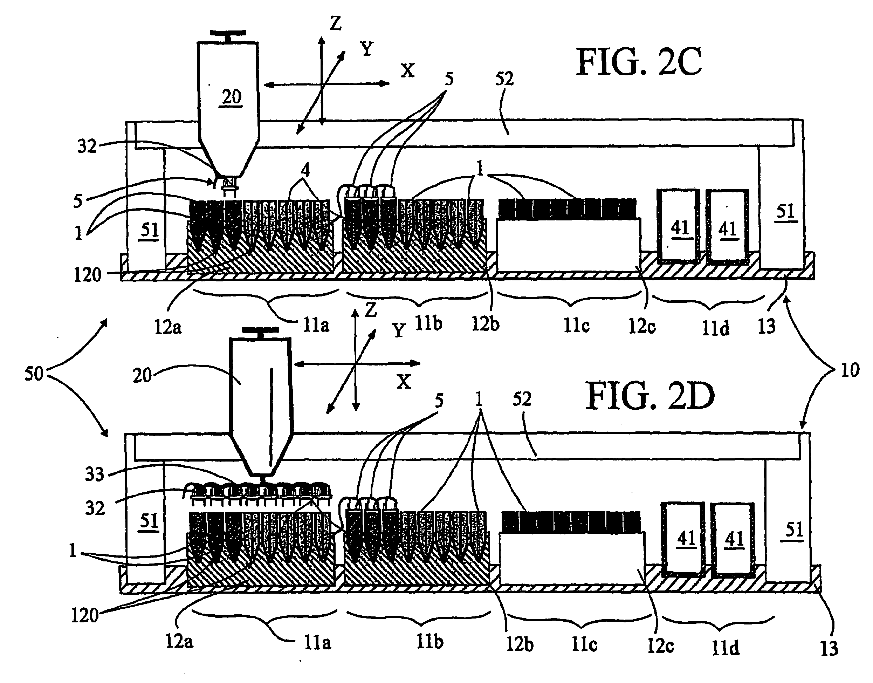

La figure 2C représente le dispositif de filtration 10 lors d'une étape de mise en place d'une paire d'électrodes 5 associée audit porte-outil 20 dans un réservoir de filtration 1 en vue d'effectuer l'opération de filtration directement et automatiquement par le porte-outil 20. Lors de cette étape, l'alimentation électrique des électrodes 5 est fournie au travers du porte-outil 20, qui est équipé par exemple d'un manchon électromagnétique 32 permettant de porter la paire d'électrodes 5 magnétisée. Il est bien entendu que la paire d'électrodes 5 peut être saisie par tout autre outil adapté tel que par exemple une pince, des mors, une ventouse, un système d'aspiration, etc.

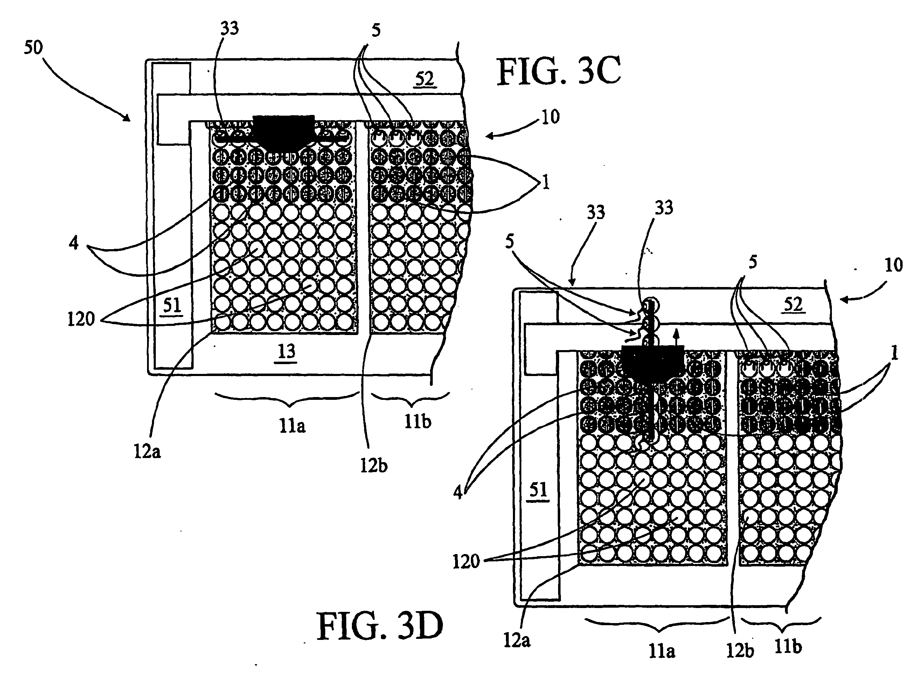

Sur les figures 2D, 3C et 3D, le porte outil 20 porte un bras de préhension 33 pourvu de huit manchons électromagnétiques 32 permettant de transporter simultanément jusqu'à huit paires d'électrodes 5 selon des colonnes sensiblement parallèles aux rails 51 et/ou selon des lignes sensiblement parallèles au chariot 52 et/ou en diagonale, dans le but de réaliser l'opération de filtration directement et automatiquement dans huit réservoirs de filtration 1 simultanément. Ce bras de préhension 33 est monté rotatif sur le porte-outil 20 pour pouvoir être pivoté comme illustré par exemple par les figures 3C et 3D.

De manière générale, le dispositif de filtration 10 peut comporter plusieurs porte-outils 20 démontables et interchangeables qui s'ajoutent ou se remplacent pour offrir une grande palette de fonctionnalités.

Chaque zone de filtration 11a-11c peut être prévue sur un support 12a-12c indépendant des autres. Ces supports 12a-12c peuvent être couplés à des moyens de déplacement (non représentés) asservis aux moyens de commande pour les déplacer en translation selon les trois axes et/ou en rotation, ces déplacements étant verticaux et/ou horizontaux. Ces supports 12a-12c ou toute autre partie du dispositif de filtration 10 peuvent être pourvus de moyens de climatisation (non représentés) permettant de réguler la température du contenu des réservoirs de filtration 1, par exemple pour éviter l'évaporation des solutions tampon qu'ils contiennent, réguler la vitesse de la filtration ou conserver une solution 2 à une température prédéterminée. Le dispositif de filtration 10 peut également être enfermé dans une enceinte isotherme.

Les moyens de déplacement 50 comportent un ou plusieurs bras mécaniques articulés asservis par les moyens de commande informatisés, ce ou ces bras mécaniques articulés étant agencés pour porter le ou les porte-outils 20. La base de ces bras mécaniques articulés peut également être prévue fixe ou mobile par rapport au châssis 13. Ces bras mécaniques articulés peuvent être démontables et interchangeables, chaque bras mécanique articulé pouvant comporter un ou plusieurs porte-outils 20 démontables et interchangeables permettant d'adapter l'outil 5,30-33 en fonction des besoins.

Les moyens de commande informatisés sont pilotés par une unité centrale de gestion centralisée et informatisée, gérée par un ou plusieurs programmes d'ordinateur ou des logiciels permettant la gestion automatisée complète des procédés de filtration par une commande adaptée du porte-outil 20 et/ou des outils 5,30-33 et/ou des supports de filtration 12a-12c. On peut ainsi déplacer, injecter, filtrer, prélever des molécules 3 en solution, des solutions, des additifs et autres, selon les besoins. On peut ainsi affiner la filtration des molécules 3 selon plusieurs critères prédéterminés, par la réalisation successive de plusieurs séquences opératoires, ces séquences pouvant être illimitées et menées en parallèle. Les moyens de commande informatisés permettent ainsi d'élaborer et de réaliser de manière automatisée des séquences de filtration multiples, répétitives ou non. Les moyens de commande peuvent bien entendu être programmés pour adapter les séquences de filtration à des besoins spécifiques et au cas par cas en fonction des résultats recherchés et des molécules à filtrer.

Le procédé et le dispositif de filtration 10 selon l'invention permettent ainsi de combiner, de manière simple, rapide et efficace plusieurs opérations de filtration ou autre, de manière consécutive et/ou simultanée. On peut ainsi, effectuer les étapes suivantes :
- injection de molécules 3 en solution 2 à fractionner dans un premier réservoir de filtration 1,
- réalisation d'une première filtration par focalisation isoélectrique,
- prélèvement d'au moins une partie des molécules 3 filtrées,
- introduction de ce prélèvement dans un second réservoir de filtration 1,
- réalisation d'une seconde filtration par focalisation électrophorétique,
- prélèvement d'au moins une partie des molécules 3 filtrées,
- introduction de ce prélèvement dans un troisième réservoir de filtration 1,
- réalisation d'une troisième filtration par porosité sélective (Cut-Off),
- prélèvement d'au moins une partie des molécules 3 filtrées.

Toutes autres combinaisons d'opérations compatibles ou complémentaires sont bien entendu possibles y compris un stationnement des molécules 3 dans un bain enzymatique ou dans une solution 2 contenant des supports d'affinité, des ligands spécifiques ou encore dans une solution 2 contenant des supports magnétisés.

Cette description met bien en évidence que le procédé et le dispositif de filtration 10 selon l'invention répondent aux buts fixés et notamment qu'un de leurs principaux avantages par rapport aux procédés et dispositifs de filtration existants est le gain de temps de filtration. En effet, ce dispositif de filtration 10 autorise le déroulement de plusieurs opérations simultanément. De plus, le gain de temps est obtenu par la présence, dans chaque réservoir de filtration 1, d'un filtre 4 unique. Les molécules 3 n'ont qu'un seul filtre 4 à traverser par opération d'où une filtration nettement accélérée par rapport aux procédés impliquant une cascade de filtres. Ce gain de temps est encore amplifié grâce à la très faible distance séparant les électrodes 5.

Un autre avantage important réside dans la flexibilité des opérations de filtration possibles et dans la variété de ces opérations. Elles sont de plus effectuées de manière automatisée ce qui permet de les réaliser de manière optimale, sans que cela soit au détriment de la qualité de chaque manipulation qui gagne en précision et en viabilité.

Enfin, dans un but de traçabilité et d'analyse des résultats, les paramètres de chaque filtration peuvent être facilement enregistrés par l'unité centrale de gestion. Ces résultats peuvent bien entendu être transmis par tout moyen de communication adapté.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Dispositif de filtration (10) et/ou de séparation de molécules (3), notamment de protéines, pourvu d'au moins une zone de filtration (11a-11c) comportant au moins un réservoir de filtration (1) apte à recevoir une solution contenant lesdits molécules (3), ledit réservoir de filtration (1) étant pourvu de moyens de filtration (4) pour filtrer lesdites molécules (3) selon au moins un critère physique et/ou chimique prédéterminé, et des moyens générateurs d'au moins un champ électrique (5) pour tendre à provoquer le déplacement d'au moins une partie desdites molécules (3) au travers desdits moyens de filtration (4), le dispositif de filtration (10) comportant également un porte-outils (20) mécanisé pourvu d'au moins un outil (5, 30-33), ce porte-outils (20) étant couplé à des moyens de déplacement (50) et à des moyens de commande, **caractérisé en ce que** ledit réservoir de filtration (1) est choisi dans le groupe comprenant un tube à essai, un flacon, une éprouvette, **en ce que** lesdits moyens de filtration (4) comportent un filtre disposé sensiblement dans l'axe de symétrie dudit réservoir de filtration (1) pour le séparer en deux chambres, ce filtre étant choisi dans le groupe comprenant les filtres isoélectriques, les filtres à porosité sélective est les filtres à échange d'ions, agencés pour séparer lesdites molécules respectivement selon leur point isoélectrique (pI), leur taille et leur charge électrique, et **en ce que** ledit porte-outils (20) est pourvu d'au moins une paire d'électrodes (5) alimentées électriquement pour former lesdits moyens générateur dudit champ électrique, ce porte-outils (20) étant agencé pour effectuer directement et automatiquement l'opération de filtration dans ledit réservoir de filtration (1).

2. Dispositif de filtration (10) selon la revendication 1, **caractérisé en ce que** ladite zone de filtration (11-11e) comporte une pluralité de réservoirs de filtration (1) indépendants.

3. Dispositif de filtration (10) selon la revendication 2, **caractérisé en ce que** ledit porte-outus (20) est pourvu de plusieurs paires d'électrodes (5) et est agencé pour effectuer directement et automatiquement l'opération de filtration isoélectrique dans plusieurs réservoirs de filtration (1) simultanément.

4. Dispositif de filtration (10) selon la revendication 1, **caractérisé en ce que** lesdits moyens de déplacement comportent au moins un chariot (52) portant ledit porte-outils (20), ce chariot (52) étant agencé pour être mobile sur un châssis (13) pour déplacer l'outil (5, 30-33) par rapport à ladite zone de filtration (11a-11c).

5. Dispositif de filtration (10) selon la revendication 4, **caractérisé en ce que** lesdits moyens de déplacement comportent deux rails (51) sensiblement parallèles l'un par rapport à l'autre et agencés pour guider ledit chariot (52) en translation sensiblement parallèle par rapport à ladite zone de filtration (11a-110).

6. Dispositif de filtration (10) selon la revendication 5, **caractérisé en ce que** lesdits rail (51) sont portés par des montants solidaires dudit châssis (13) et disposés de part et d'autre de ladite zone de filtration (11a-c).

7. Dispositif de filtration (10) selon la revendication 5, **caractérisé en ce que** lesdits rails (51) sont intégrés audit châssis (13) et **en ce que** ledit chariot (52) définit un portique.

8. Dispositif de filtration (10) selon la revendication 4, **caractérisé en ce que** ledit chariot (52) comporte une glissière sur laquelle ledit porte-outil (20) est monté mobile en translation.

9. Dispositif de filtration (10) selon la revendication 1, **caractérisé en ce que** lesdits moyens de déplacement comportent au moins un bras articulé portant ledit porte-outils (20).

10. Dispositif de filtration (10) selon l'une au moins des revendications 4 et 9, **caractérisé en ce qu'**il comporte plusieurs chariots (52) et/ou bras articulés et/ou porte-outils (20) agencés pour être démontables et interchangeables.

11. Dispositif de filtration (10) selon la revendication 10, **caractérisé en ce qu'**il comporte au moins un porte-outils (20) dédié à l'opération de filtration et au moins un autre porte-outils (20) dédié à au moins une opération complémentaire choisie parmi la manipulation des réservoirs de filtration (1), d'électrodes (5), le prélèvement et/ou l'injection d'une solution, d'un additif, de molécules en solution, de molécules filtrées.

12. Dispositif selon la revendication 11, **caractérisé en ce que** ledit porte-outils (20) comporte au moins un outil complémentaire (30-33) choisi dans le groupe comprenant une pince (30), un préhenseur électromagnétique (32), un porte seringue, des doigts ou un bras de préhension (33), des mors, une seringue (31), un piston, une ventouse, un système par aspiration.

13. Dispositif de filtration (10) selon la revendication 2, **caractérisé en ce que** les réservoirs de filtration (1) sont portés par au moins un support (12a-12c) couplé à des moyens de déplacement complémentaires asservis par lesdits moyens de commande et agencés pour déplacer ledit support (12a-c) en translation et/ou en rotation par rapport à ladite zone de filtration (11a-11c) et/ou audit porte-outils (20).

14. Dispositif de filtration (10) selon la revendication 2, **caractérisé en ce qu'**il comporte au moins une zone de préparation (11d) agencée pour autoriser les opération pré et/ou post filtration telles que : stockage de molécules, rinçage, dilution, désinfection, ajout d'additif déchets.

15. Dispositif de filtration (10) selon la revendication 14, **caractérisé en ce que** ladite zone de préparation (11d) est pourvue d'au moins un bac (40, 41) choisi dans le groupe comprenant un bac de stockage de molécules, un bac tampon, un bac à déchets, un bac à solvant, un bac de nettoyage, un bac à réactions chimiques et/ou biologiques.

16. Dispositif de filtration (10) selon la revendication 1, **caractérisé en ce que** lesdits moyens de commande informatisés sont pilotés par au moins une unité centrale gérée par au moins un programme informatique.

17. Dispositif de filtration (10) selon la revendication 1, **caractérisé en ce que** lesdits moyens de déplacement comportent au moins l'un des actionneurs choisi dans le groupe comprenant un moteur, un moto-réducteur ,un vérin, un électro-aimant.

18. Dispositif de filtration (10) selon la revendication 1, **caractérisé en ce que** ladite zone de filtration (11a-11c) est couplée à des moyens de climatisation agencés pour réguler au moins la température desdits réservoirs de filtration (1).

19. Dispositif de filtration (10) selon la revendication 18, **caractérisé en ce que** lesdits moyens de climatisation comportent au moins une enceinte thermiquement régulée apte à recevoir ledit dispositif de filtration (10).

20. Procède de filtration et/ou de séparation de molécules (3), notamment de protéines, au cours duquel :
- on dispose dans au moins une zone de filtration (11a-11c) au moins un premier réservoir de filtration (1) des molécules (3) en solution, ledit réservoir de filtration (1) comportant des moyens de filtration (4) pour séparer lesdites molécules (3) selon au moins un premier critère physique ou chimique prédéterminé,
- on applique un champ électrique pour provoquer le déplacement d'au moins une partie desdites molécules (3) au travers desdits moyens de filtration, et
- on récupère lesdites molécules (3) après filtration,
procédé dans lequel on utilise un porte-outils (20) mécanisé pourvu d'au moins un outil (5, 30-33), ce porte-outils étant couplé à des moyens de déplacement (50) et à des moyens de commande informatisés, procédé **caractérisé en ce qu'**on utilise comme moyens de filtration (4) un filtre disposé sensiblement dans l'axe de symétrie dudit réservoir de filtration (1) pour le séparer en deux chambres, **en ce qu'**on choisit ledit filtre dans le groupe comprenant les filtres isoélectriques, les filtres à porosité sélective et les filtres à échange d'ions, agencés pour séparer lesdites molécules respectivement selon leur point isoélectrique (pI), leur taille et leur charge électrique, et **en ce qu'**on effectue directement et automatiquement l'opération de filtration dans ledit réservoir de filtration (1) au moyen dudit porte-outils (20) mécanisé pourvu d'au moins une paire d'électrodes (5) alimentées électriquement pour former lesdits moyens générateurs dudit champ électrique,.

21. Procédé selon la revendication 20, **caractérisé en ce qu'**on dispose lesdites molécules (3) en solution dans une pluralité de réservons de filtration (1) indépendants.

22. Procédé selon la revendication 21, **caractérisé en ce qu'**on applique ledit champ électrique dans plusieurs réservoirs de filtration (1) simultanément, directement et automatiquement par ledit porte-outil (20) pourvu de plusieurs paires d'électrodes (5).

23. Procédé selon la revendication 21, **caractérisé en ce qu'**on prévoit des réservoirs de filtration (1) avec au moins un second filtre agencé pour séparer lesdites molécules (3) selon au moins un second critère physique ou chimique prédéterminé et **en ce qu'**aptes la première filtration, on prélevé au moins une partie des molécules filtrées selon un premier critère, on introduit ledit prélèvement dans au moins un second réservoir de filtration (1) comportant un second filtre (4) et on effectue au moins une seconde filtration au moyen dudit porte-outil (20) pourvu d'au moins une paire d'électrodes (5).

## Claims

1. A device (10) for the filtration and/or separation of molecules (3), particularly proteins, having at least one filtration zone (11a-c) comprising at least one filtration reservoir (1) capable of receiving a solution containing said molecules (3), said filtration reservoir (1) being equipped with a filtration means (4) for filtering said molecules (3) according to at least one predetermined physical and/or chemical parameter, and a means for generating at least one electrical field (5) which tends to provoke the displacement of at least a portion of said molecules (3) through said filtration means (4), said filtration device (10) comprising at least one mechanized tool holder (20) equipped with at least one tool (5, 30-33), said tool holder (20) being coupled with a displacement means (50) and a control means, **characterized in that** said filtration reservoir (1) is selected from the group consisting of a test tube, a flask, a measuring beaker, **in that** said filtration means (4) comprises a filter disposed generally in the axis of symmetry of said filtration reservoir (1) separating it into two chambers, said filter being selected from the group comprising isoelectric filters, selective porosity filters and ion exchange filters, for separating said molecules according to their isoelectric point (pI), their size and their electrical charge, respectively, and **in that** said tool holder (20) is equipped with at least a pair of electrically charged electrodes (5) which form said means for generating said electrical field, said tool holder (20) being capable of achieving the filtration process directly and automatically in said filtration reservoir (1).

2. A filtration device (10) according to claim 1, **characterized in that** said filtration zone (11a, 11c) comprises a plurality of independent filtration reservoirs (1).

3. A filtration device (10) according to claim 2, **characterized in that** said tool holder (20) is equipped with a plurality of electrode pairs (5) and is capable of achieving the isoelectric filtration process directly and automatically in a plurality of filtration reservoirs simultaneously.

4. A filtration device (10) according to claim 1, **characterized in that** said displacement means comprises at least one carriage (52) holding said tool holder (20), said carriage (52) designed to be movable on a chassis (13) in order to displace the tool (5, 30-33) relative to said filtration zone (11a-11c).

5. A filtration device (10) according to claim 4, **characterized in that** said displacement means comprises two rails (51) generally parallel to one another designed to guide said carriage (52) in translation generally parallel relative to said filtration zone (11a-11c).

6. A filtration device (10) according to claim 5, **characterized in that** said rails (51) are held by upright pieces integral with said chassis (13) and located on either side of said filtration zone (11a-c).

7. A filtration device (10) according to claim 5, **characterized in that** said rails (51) are integral with said chassis (13) and **in that** said carriage (52) defines an overhead support element.

8. A filtration device (10) according to claim 4, **characterized in that** said carriage (52) comprises a slide along which said tool holder (20) is attached so as to move in translation.

9. A filtration device (10) according to claim 1, **characterized in that** said displacement means comprises at least one articulated arm holding said tool holder (20).

10. A filtration device (10) according to at least one of claims 4 and 9, **characterized in that** it comprises several carriages (52) and/or articulated arms and/or tool holders (20) that are removable and interchangeable.

11. A filtration device (10) according to claim 10, **characterized in that** it comprises at least one tool holder (20) dedicated to isoelectric filtration and at least one tool holder (20) dedicated to at least one complementary operation, selected from the group consisting of manipulation of filtration reservoirs (1), of electrodes (5), withdrawal and/or injection of a solution, an additive, molecules contained in a solution, filtered molecules.

12. A filtration device (10) according to claim 11, **characterized in that** said tool holder (20) comprises at least one complementary tool (30-33) selected from the group consisting of claw a (30), an electromagnetic gripping tool (32), a syringe holder, gripping fingers or a gripping arm (33), jaws, a syringe (31), a piston, a suction device, or a vacuum system.

13. A filtration device (10) according to claim 2, **characterized in that** said filtration reservoirs (1) are hold by at least one support (12a-12c) coupled with a complementary displacement means controlled by said control means and designed to displace said support (12a-c) in translation and/or in rotation relative to said filtration zone (11a-11c) and/or to said tool holder (20).

14. A filtration device (10) according to claim 2, **characterized in that** it comprises at least one preparation zone (11d) to allow pre- and/or post-filtration operations such as: storage of molecules, rinsing, diluting, disinfecting, introducing additive, waste material.

15. A filtration device (10) according to claim 14, **characterized in that** said preparation zone (11d) is equipped with at least one container (40, 41) selected from the group comprising a molecule storage container, a buffer container, a waste container, a solvent container, a cleaning container, a chemical and/or biological reaction container.

16. A filtration device (10) according to claim 1, **characterized in that** said computerized control means is driven by at least one central processor run by at least one software program.

17. A filtration device (10) according to claim 1, **characterized in that** said displacement means comprises at least one of the actuators selected from the group comprising a motor, a reduction gear motor, a cylinder, an electromagnet.

18. A filtration device (10) according to claim 1, **characterized in that** said filtration zone (11a-11c) is coupled with air conditioning means for regulating at least the temperature of said filtration reservoirs (1).

19. A filtration device (10) according to claim 18, **characterized in that** said air conditioning means comprises at least one thermally regulated compartment capable of receiving said filtration device (10).

20. A method for filtration and/or separation of molecules (3), particularly proteins, in which:
- at least a first filtration reservoir (1) for molecules (3) in solution is disposed in at least one filtration zone (11a-11c), said filtration reservoir (1) comprising filtration means (4) to separate said molecules (3) according to at least one predetermined physical or chemical parameter, an electrical field is applied to provoke displacement of at least a portion of said molecules (3) through said filtration means; and
- said molecules (3) are recovered after filtration;
method being performed by using a mechanized tool holder (20) equipped with at least one tool (5, 30-33), said tool holder (20) being coupled with a displacement means (50) and a computerized control means, **characterized in that** a filtration means (4) comprising a tilter disposed generally in the axis of symmetry of said filtration reservoir (1) to separate it into two chambers is used, **in that** said filter is selected from the group comprising isoelectric filters, selective porosity filters and ion exchange filters for separating said molecules according to their isoelectric point (pI), their size and their electrical charge, respectively, and **in that** it is performed directly and automatically in said filtration reservoir by using said mechanized tool holder (20) equipped with at least one electrically charged electrodes pair (5) to generate said electrical field.

21. A method according to claim 20, **characterized in that** it is performed by placing said molecules (3) in solution in a plurality of independent filtration reservoirs (1).

22. A method according to claim 21, **characterized in that** it is performed by applying said electrical field directly, automatically, through said tool holder (20) equipped with a plurality of electrodes pairs, simultaneously on a plurality of filtration reservoirs (1).

23. A method according to claim 21, **characterized in that** it is performed by using filtration reservoirs (1), equipped with at least a second filter capable of separating said molecules according to at least one predetermined physical and/or chemical parameter, and by removing after the first filtration at least a portion of said molecules (3) filtered according to a first parameter, said removal being placed in at least a second filtration reservoir (1) equipped with a second filter (4) and at least a second filtration being performed by using said tool holder (20) equipped with at least a pair of electrodes (5).

## Patentansprüche

1. Vorrichtung (10) zur Filtration und/oder Trennung von Molekülen (3), insbesondere Proteinen, ausgestattet mit mindestens einer Filtrationszone (11a-11c), welche mindestens einen Filtrationsbehälter (1) beträgt, der eine die besagten Moleküle (3) enthaltende Lösung aufnehmen kann, wobei der besagte Filtrationsbehälter (1) mit Filtrationsmitteln (4) versehen ist um die besagten Moleküle (3) nach mindestens einem vorher festgelegten physischen und/oder chemischen Kriterium zu filtern, sowie mit den Mitteln um mindestens ein elektrisches Feld (5) zu erzeugen, um darauf abzuzielen, die Bewegung von mindestens einem Teil der besagten Moleküle (3) durch die besagten Filtrationsmittel (4) zu bewirken, wobei die Vorrichtung (10) zur Filtration ebenfalls einen mit mindestens einem Werkzeug (5, 30-33) ausgestatteten mechanisierten Werkzeugträger (20) beträgt, wobei dieser Werkzeugträger (20) mit Bewegungsmitteln (50) und mit Steuermitteln gekoppelt ist, **dadurch gekennzeichnet, dass** der besagte Filtrationsbehälter (1) in der Gruppe bestehend aus einem Reagenzglas, einem Kolben, einem Prüfglas gewählt wird, **dadurch**, dass die besagten Filtrationsmittel (4) einen in wesentlichen auf der Symmetrie-Achse des besagten Filtrationsbehälters (1) angeordneten Filter betragen um diesen in zwei Kammern aufzuteilen, wobei dieser Filter in der Gruppe bestehend aus den isoelektrischen Filtern, den Filtern mit selektiver Porosität und den Ionenaustauschfiltern gewählt wird, die angeordnet werden, um die besagten Moleküle nach ihrem isoelektrischen Punkt (pI), ihrer Größe bzw. ihrer elektrischen Ladung zu trennen, und **dadurch**, dass der besagte Werkzeugträger (20) mit mindestens einem Paar elektrisch gespeister Elektroden (5) ausgestattet ist um die besagten Mittel zur Erzeugung des besagten elektrischen Felds zu bilden, wobei dieser Werkzeugträger (20) angeordnet ist um der Filtrationsvorgang direkt und automatisch in dem besagten Filtrationsbehälter (1) durchzuführen.

2. Vorrichtung (10) zur Filtration nach Anspruch 1. **dadurch gekennzeichnet, dass** die besagte Filtrationszone (11a-11c) eine Vielzahl unabhängiger Filtrationsbehälter (1) beträgt.

3. Vorrichtung (10) zur Filtration nach Anspruch 2, **dadurch gekennzeichnet, dass** der besagte Werkzeugträger (20) mit mehreren Paaren Elektroden (5) versehen ist und angeordnet ist, um den isoelektrischen Filtrationsvorgang direkt und automatisch in mehreren Filtrationsbehältern (1) gleichzeitig durchzuführen.

4. Vorrichtung (10) zur Filtration nach Anspruch 1, **dadurch gekennzeichnet, dass** die besagten Bewegungsmittel mindestens einen Schlitten (52) betragen, der den besagten Werkzeugträger (20) trägt, wobei dieser Schlitten (52) ausgelegt ist, um sich auf einem Gestell (13) bewegen zu können, um das Werkzeug (5, 30-33) in Bezug auf die besagte Filtrationszone (11a-11c) zu bewegen.

5. Vorrichtung (10) zur Filtration nach Anspruch 4, **dadurch gekennzeichnet, dass** die besagten Bewegungsmittel zwei in wesentlichen zueinander parallele Führungen (51) betragen, die ausgelegt sind, um den besagten Schlitten (52) in einer im wesentlichen parallelen Translation in Bezug auf die besagte Filtrationszone (11a-11c) zu führen.

6. Vorrichtung (10) zur Filtration nach Anspruch 5, **dadurch gekennzeichnet, dass** die besagten Führungen (51) von an dem besagten Gestell (13) befestigten und beidseitig der besagten Filtrationszone (11a-c) angeordneten Ständern getragen werden.

7. Vorrichtung (10) zur Filtration nach Anspruch 5. **dadurch gekennzeichnet, dass** die besagten Führungen (51) in dem besagten Gestell (13) integriert sind und **dadurch**, dass der besagte Schlitten (52) ein Portal bildet.

8. Vorrichtung (10) zur Filtration nach Anspruch 4, **dadurch gekennzeichnet, dass** der besagte Schlitten (52) eine Führung beträgt, auf der der besagte Werkzeugträger (20) verfahrbar montiert ist.

9. Vorrichtung (10) zur Filtration nach Anspruch 1, **dadurch gekennzeichnet, dass** die besagten Bewegungsmittel mindestens einen Gelenkarm betragen, der den besagten Werkzeugträger (20) trägt.

10. Vorrichtung (10) zur Filtration nach mindestens einem der Ansprüche 4, und 9, **dadurch gekennzeichnet, dass** sie mehrere Schlitten (52) und/oder Gelenkarme und/oder Werkzeugträger (20) beträgt, die ausgelegt sind, um demontierbar und auswechselbar zu sein.

11. Vorrichtung (10) zur Filtration nach Anspruch 10, **dadurch gekennzeichnet, dass** sie mindestens einen dem Filtrationsvorgang gewidmeten Werkzeugträger (20), sowie mindestens einen anderen Werkzeugträger (20) beträgt, der mindestens einem komplementären Vorgang gewidmet ist, gewählt unter der Handhabung der Filtrationsbehälter (1), von Elektroden (5), der Entnahme und/oder der Injektion einer Lösung, eines Additivs, von Molekülen in einer Lösung, von gefilterten Molekülen.

12. Vorrichtung nach Anspruch 11, **dadurch gekennzeichnet, dass** der besagte Werkzeugträger (20) mindestens ein komplementäres Werkzeug (30-33) beträgt, das in der Gruppe bestehend aus einem Greifer (30), einem elektromagnetischen Greifer (32), einem Injektionsspritzenträger. Greif-Finger oder einem Greif-Arm (33), Spannbacken, einer Injektionsspritze (31), einem Kolben, einem Saugnapf, einem Vakuumsystem gewählt wird.

13. Vorrichtung (10) zur Filtration nach Anspruch 2, **dadurch gekennzeichnet, dass** die Filtrationsbehälter (1) von mindestens einem Träger (12a-12c) getragen werden, der mit komplementären Bewegungsmitteln gekoppelt ist, die von den besagten Steuermitteln gesteuert werden und die ausgelegt sind, um den besagten Träger (12a-c) auf einer Geraden und/oder in einem Kreis in Bezug auf die besagte Filtrationszone (11a-11c) und/oder auf den besagten Werkzeugträger (20) zu bewegen.

14. Vorrichtung (10) zur Filtration nach Anspruch 2, **dadurch gekennzeichnet, dass** er mindestens eine Vorbereitungszone (11d) beträgt, die ausgelegt ist, um die Vorgänge vor und/oder nach der Filtration zu ermöglichen, wie: Lagerung von Molekülen, Spülen, Verdünnung, Desinfektion, Zugabe von Additiven, Abfälle.

15. Vorrichtung (10) zur Filtration nach Anspruch 14, **dadurch gekennzeichnet, dass** die besagte Vorbereitungszone (11d) mit mindestens einem Behälter (40, 41) versehen ist, der in der Gruppe bestehend aus einem Molekülen-Lagerungsbehälter, einem Pufferbehälter, einem Abfallbehälter, einem Lösemittelbehälter, einem Reinigungsbehälter einem Behälter für chemische und/oder biologische Reaktionen gewählt wird.

16. Vorrichtung (10) zur Filtration nach Anspruch 1, **dadurch gekennzeichnet, dass** die besagten informatisierten Steuermittel durch mindestens eine von mindestens einem EDV-Programm verwaltete Zentraleinheit gesteuert werden.

17. Vorrichtung (10) zur Filtration nach Anspruch 1, **dadurch gekennzeichnet, dass** die besagten Bewegungsmittel mindestens einen der Antriebe beträgt, der in der Gruppe bestehend aus einem Motor, einem Getriebemotor, einem Zylinder, einem Elektromagneten gewählt wird.

18. Vorrichtung (10) zur Filtration nach Anspruch 1, **dadurch gekennzeichnet, dass** die besagte Filtrationszone (11a-11c) mit Klimatisierungsmitteln gekoppelt ist, die ausgelegt sind, um mindestens die Temperatur der besagten Filtrationsbehälter (1) zu regeln.

19. Vorrichtung (10) zur Filtration nach Anspruch 18, **dadurch gekennzeichnet, dass** die besagten Klimatisierungsmittel mindestens einen wärmegeregelten Raum betragen, der die besagte Filtrations-Vorrichtung (10) aufnehmen kann.

20. Verfahren zur Filtration und/oder Trennung von Molekülen (3), insbesondere Proteinen, während welchem:
- man in mindestens einer Filtrationszone (11a-11c) mindestens einen ersten Filtrations-Behälter (1) für aufgelöste Moleküle (3) anordnet, wobei der besagte Filtrationsbehälter (1) mit Filtrationsmitteln (4) versehen ist um die besagten Moleküle (3) nach mindestens einem vorher festgelegten physischen und/oder chemischen Kriterium zu trennen,
- man ein elektrisches Feld anwendet, um die Bewegung von mindestens einem Teil der besagten Moleküle (3) durch die besagten Filtrationsmittel zu bewirken, und
- man die besagten Moleküle (3) nach der Filtration aufnimmt,
Verfahren in welchem man einen mit mindestens einem Werkzeug (5, 30-33) versehenen mechanisierten Werkzeugträger (20) verwendet, wobei dieser Werkzeugträger mit Bewegungsmitteln (50) und mit informatisierten Steuermitteln gekoppelt ist, **dadurch gekennzeichnet, dass** man als Filtrationsmittel (4) einen in wesentlichen auf der Symmetrie-Achse des besagten Filtrationsbehälters (1) angeordneten Filter verwendet um diesen in zwei Kammern aufzuteilen, **dadurch**, dass der besagte Filter in der Gruppe bestehend aus den isoelektrischen Filtern, den Filtern mit selektiver Porosität und den Ionenaustauschfiltern gewählt wird, die angeordnet werden, um die besagten Moleküle nach ihrem isoelektrischen Punkt (pI), ihrer Größe bzw. ihrer elektrischen Ladung zu trennen, und **dadurch**, dass man den Filtrationsvorgang direkt und automatisch in dem besagten Filtrationsbehälter (1) durchführt, mittels des besagten mechanisierten Werkzeugträgers (20), der mit mindestens einem Paar elektrisch gespeister Elektroden (5) ausgestattet ist um die besagten Mittel zur Erzeugung des besagten elektrischen Felds zu bilden.

21. Verfahren nach Anspruch 20, **dadurch gekennzeichnet, dass** man die besagten aufgelösten Moleküle (3) in eine Vielzahl unabhängiger Filtrationsbehälter (1) gibt.

22. Verfahren nach Anspruch 21, **dadurch gekennzeichnet, dass** man das besagte elektrische Feld direkt und automatisch über den besagten, mit mehrerer Paaren Elektroden (2) versehenen Werkzeugträger (20) gleichzeitig für mehrere Filtrationsbehälter (1) anwendet.

23. Verfahren nach Anspruch 21, **dadurch gekennzeichnet, dass** man Filtrationsbehälter (1) vorsieht mit mindestens einem zweiten Filter, der angeordnet ist um die besagten Moleküle (3) nach mindestens einem zweiten vorher festgelegten physischen oder chemischen Kriterium zu trennen und **dadurch** dass, nach der ersten Filtration, man mindestens ein Teil der nach dem ersten Kriterium gefilterten Moleküle entnimmt, man die besagte Entnahme mindestens in einen zweiten Filtrationsbehälter (1) mit einem zweiten Filter (4) gibt und man mit dem mit mindestens einem Paar Elektroden (5) versehenen Werkzeugträger (20) mindestens eine zweite Filtration durchführt.
